# EUROPÄISCHE PATENTSCHRIFT

(11) **EP 3 270 489 B1**
(45) Veröffentlichungstag und Bekanntmachung des Hinweises auf die Patenterteilung: **15.07.2020**
(21) Anmeldenummer: 17189636.8
(22) Anmeldetag: 20.02.2014
(51) Int. Cl.: H02K 3/04, H02K 3/47, H01F 41/06

(54) **FORMSPULE ZUM HERSTELLEN EINER SELBSTTRAGENDEN LUFTSPALT-WICKLUNG, INSBESONDERE SCHRÄGWICKLUNG EINES ELEKTRO-KLEINMOTORS**
PRE-FORMED COIL FOR MAKING A SELF-SUPPORTING AIR GAP WINDING, IN PARTICULAR HELICAL WINDING OF A SMALL ELECTRIC MOTOR
BOBINE FORMÉE POUR LA FABRICATION D'UN ENROULEMENT À ENTREFER AUTOPORTANT, NOTAMMENT ENROULEMENT OBLIQUE D'UN PETIT MOTEUR ÉLECTRIQUE

(30) Priorität: 17.05.2013 DE 102013105130; 12.06.2013 EP 13171603; 18.07.2013 EP 13177009
(43) Veröffentlichungstag der Anmeldung: 17.01.2018
(62) Teilanmeldung aus: 14156000.3
(73) Patentinhaber: Dr. Fritz Faulhaber GmbH & Co. KG, 71101 Schönaich (DE)
(72) Erfinder: KELLER, Roland, 72181 Starzach-Felldorf (DE); NAGEL, Armin, 71088 Holzgerlingen (DE); HOLDER, Andreas, 71093 Weil im Schönbuch (DE); KRUMBEIN, Markus, 71229 Leonberg (DE); PUPLICS, Janos, 71093 Neuweiler (DE)
(74) Vertreter: Patent- und Rechtsanwälte Dr. Solf & Zapf

(56) Entgegenhaltungen:
- EP-A2- 2 180 581
- EP-B1- 1 780 871
- DE-A1- 10 114 129
- DE-A1-102009 009 018
- US-B1- 7 061 153

## Beschreibung

Die vorliegende Erfindung betrifft eine Formspule zum Herstellen einer selbsttragenden Luftspalt-Wicklung, insbesondere Schrägwicklung eines Elektro-Kleinmotors gemäß dem Oberbegriff des Anspruch 1.

Weiterhin betrifft die Erfindung auch eine selbsttragende Luftspalt-Wicklung, insbesondere Schrägwicklung unter Verwendung einer erfindungsgemäßen Formspule.

Aus der EP 1 780 871 B1 ist eine Formspule der gattungsgemäßen Art bekannt. Hierbei sollen die einzelnen Windungen zunächst in einem ebenen Zustand spiralartig um eine innerhalb der fertigen Formspule radial verlaufende Achse gewickelt und erst danach in die fertige Form verformt, gebogen werden. Um dabei vor allem in den Bereichen, in denen der jeweilige radiale Versatz gebildet werden muss, Schäden durch mechanische Überbeanspruchung, wie Überdehnungen des Drahtes, zu vermeiden, ist gemäß diesem Dokument vorgesehen, dass jede Windung zur Ermöglichung des Versatzes zusätzliches Drahtmaterial als Vorlauf, beispielsweise in Form von haarnadelförmigen Ausbuchtungen, aufweist, da bei der Herstellung des Versatzes durch eine nachträgliche Biegeverformung der fertig gewickelten und in der Regel thermisch verbackenen Formspule zusätzliches Drahtmaterial benötigt wird, um in diesem Bereich eine Überdehnung des Drahtes zu vermeiden. Dennoch kann es durch Verformungen der fertigen Formspule zu Schäden kommen; da das Drahtmaterial mechanisch beansprucht wird, können besonders in den Bereichen, in denen die zur Biegeverformung erforderlichen Kräfte aufgebracht werden müssen, nachteilige Draht- Querschnittsveränderungen sowie auch Beschädigungen der Backlack-Beschichtungen durch Reißen oder gar Abplatzen auftreten. Außerdem muss der so genannte Vorlauf sehr genau an den erforderlichen Versatz angepasst sein; wenn der Vorlauf zu kurz oder auch zu lang sein sollte, kann der jeweilige Versatz nicht ohne mechanische Überbeanspruchung optimal gebildet werden.

Weiterhin sind aus der EP 2 180 581 A2 Spulenanordnungen mit überlappenden und ineinandergreifenden Spulen bekannt, wobei die Wicklungen einen Ebenenversatz aufweisen. Derartige Spulen werden mit einem rechteckigen Flachdraht in eine rautenförmige Form gewickelt, verbunden und anschließend gemeinsam verbogen.

Die DE 101 14 129 A1 beschreibt ebenfalls eine rohrförmige, insbesondere hohlzylinderische, eisenlose selbsttragende Wicklung eines Elektromotors, wobei die sich überlappenden Formspulen ohne radiale Versatzabschnitte mit nur einem Krümmungsradius geformt werden. Deshalb kommt es beim Zusammensetzen der Formspulen zu der gesamten Wicklung zu nachträglichen Verformungen und daraus resultierenden mechanischen Belastungen, und zwar besonders in den axial gegenüberliegenden Bereichen, in denen wegen der Überlappung der Formspulen ein Übergang zwischen einem inneren Zylinderbereich und einem äußeren Zylinderbereich, auf dem die Formspulen liegen, erfolgen muss.

Dreidimensionale Spulen, wie sie aus der DE 10 2009 009 018 A1 bekannt sind, bestehen aus bandförmigen Leitern, die keine wesentlichen Dehnungen des Materials während des Wickelvorgangs aufweisen und nach dem Wicklungsprozess ohne weitere Formgebung weitgehend selbsttragende fertige Spulen darstellen. Derartige Wicklungen weisen ebenfalls keine Ebenenversatz auf.

Der vorliegenden Erfindung liegt die Aufgabe zugrunde, eine Formspule der eingangs genannten Art derart zu verbessern, dass bei ihrer Formung Schäden am Drahtmaterial des Drahtelementes und an dessen Drahtquerschnitt sowie im Bereich der Versatzabschnitte und an der Isolationsschicht des Drahtelementes vermieden werden, und dass der Verlauf des Drahtelementes in den Bereichen der Versatzabschnitte optimiert wird.

Erfindungsgemäß wird diese Aufgabe durch die Merkmale des Anspruchs 1 gelöst, wobei jede die Formspulseiten und die Versatzabschnitte aufweisende Windung durch unmittelbare Krafteinwirkung auf das die Windung bildende Drahtelement durch die beim Wickelvorgang wirksamen Kräfte geformt ist. Erfindungsgemäß wird demnach die erfindungsgemäße Formspule ausschließlich während des Wickelvorgangs sowohl im Bereich ihrer Formspulseiten als auch im Bereich der Versatzabschnitte geformt. Es findet somit keinerlei nachträgliche Biegeverformung der fertig gewickelten Formspule statt. Somit wird erfindungsgemäß das Drahtmaterial beim Wickeln unmittelbar bei jeder einzelnen Windung sofort in die gewünschte Verlaufsform gelegt. Hieraus resultiert eine geringe plastische Verformung des Drahtelementes, weil eine Biegeverformung während des Wickelvorgangs nur bei jeder einzelnen Windung im Vergleich zu einer Biegeverformung der gesamten, fertigen Formspule erfolgt, so dass hierbei sehr viel geringere Kräfte erforderlich sind. Erfindungsgemäß werden somit mechanische Beschädigungen, wie insbesondere Querschnittänderungen des Drahtmaterials und ein Reißen oder Abplatzen der Draht-Beschichtung, vermieden oder zumindest sehr deutlich reduziert.

Die erfindungsgemäße Formspule zeichnet sich folglich dadurch aus, dass in allen Bereichen, das heißt sowohl in den mit unterschiedlichen Krümmungsradien gekrümmten Formspulseiten als auch in den Versatzabschnitten das Drahtmaterial ohne Beeinträchtigung seines Drahtquerschnittes und seiner äußeren Draht-Beschichtung verformt ist.

Durch die Erfindung wird somit eine optimale Formbildung erreicht, und zwar auch in den Versatzabschnitten, weil jede Windung ohne Längenänderung - und somit ohne mechanische Spannungsbelastung - schonend in die erforderliche Form gebracht ist. Die jeweils erforderliche Drahtlänge ergibt sich somit optimal von selbst; ein vorgefertigter "Vorlauf" als Längen-Reservoir ist daher nicht erforderlich.

Erfindungsgemäß ist es weiterhin zweckmäßig, wenn der Wicklungssinn mehrerer, die Formspulseiten und die Windungs-Versatzabschnitte bildenden, parallelen Windungen gleichgerichtet ist.

Weiterhin kann es erfindungsgemäß zweckmäßig sein, wenn die erfindungsgemäße Formspule durch mindestens eine modifiziert rautenförmige Windung, eine trapezförmige Windung, eine elliptische Windung, eine rautenförmige Windung mit geradem Mittelteil oder eine rautenähnliche Windung, deren zu ihrer Längsachse verlaufende Querachse im Bereich ihrer größten Windungsweite kürzer ist als die Längsachse zwischen den Stirnenden.

Weiterhin kann es erfindungsgemäß zweckmäßig sein, wenn die Krümmungsradien der Formspulseiten entlang der Längsachse von dem einen Stirnende zum anderen Stirnende jeweils konstant sind, wobei die Versatzabschnitte radial gerichtet zur Längsachse verlaufen. Erfindungsgemäß kann es ebenfalls von Vorteil sein, wenn die Krümmungsradien der Formspulseiten über die Längsachse von einem Stirnende zum anderen Stirnende stetig zunehmen, wobei die Versatzabschnitte radial-axial gerichtet verlaufen.

Alternativ kann erfindungsgemäß ebenfalls vorgesehen sein, dass die Krümmungsradien der Formspulseiten über die Längsachse von einem Stirnende zum anderen Stirnende über einen ersten Abschnitt konstant sind und über einen zweiten, sich daran anschließenden Abschnitt kontinuierlich zu- oder abnehmen.

Weiterhin kann erfindungsgemäß vorgesehen sein, dass die Stirnenden einer erfindungsgemäßen Formspule mit einem Abklappungswinkel von 0 bis 90° in Bezug auf die Längsachse in Richtung auf die Längsachse oder von der Längsachse weg umgeklappt sind, wobei die Versatzabschnitte axial ausgerichtet sind. Durch ein derartiges Umklappen der Stirnenden kann die Baulänge einer erfindungsgemäßen Formspule verkürzt werden.

Aus den erfindungsgemäßen Formspulen können Wicklungen mit allen Strangzahlen und für alle Polpaarzahlen realisiert werden. Insbesondere können für Bürstenlosmotoren (Drehstrommotoren) dreisträngige Wicklungen mit der Schaltart Sternschaltung oder Dreieckschaltung aufgebaut werden. Für DC-Motoren können Schleifen- und Wellenwicklungen, insbesondere 5-, 7-, 9-,11- und 13-teilig, aufgebaut werden. Dies ist nicht nur für 2 polige (Polpaarzahl = 1) oder 4-polige (Polpaarzahl = 2) Auslegungen des magnetischen Kreises möglich, sondern auch für höherpolige Auslegungen.

Das Drahtelement jeder Windung kann spiralartig und ein- oder mehrlagig sowie insbesondere kreuzungsfrei von einem Windungsanfang zu einem Windungsende gewickelt sein. Weiterhin kann es zweckmäßig sein, wenn das Drahtelement aus einem Einzeldraht mit einem kreisförmigen oder länglichen, beispielsweise rechteckigen Drahtquerschnitt gebildet ist oder aus einem Paralleldraht mit mindestens zwei, beispielsweise vier parallel, nebeneinander verlaufenden und stoffschlüssig über eine Lackschicht verbundenden Drähten oder aus einem Litzendraht.

Ein Herstellungsverfahren für die Herstellung einer erfindungsgemäßen Formspule ist dadurch gekennzeichnet, dass die Formspule durch unmittelbare Formgebung des Drahtelementes während des Wickelvorgangs und der hierbei auf das Drahtelement wirkenden Kräfte - und somit ohne nachträgliche Verformung der fertig gewickelten Formspule - mit ihren mit verschiedenen Krümmungsradien gekrümmten Formspulseiten und den stirnseitigen Windungsversatzabschnitten sowie insbesondere auch mit erfindungsgemäßen abgeklappten Stirnenden geformt wird. Bevorzugt wird dann unmittelbar nach dem formgebenden Wickeln die Formspule zum Verbacken einer Backlack-Beschichtung des Drahtmaterials zeitweilig erwärmt. Für diese Erwärmung kann die Formspule mit Vorteil zeitweilig mit einem elektrischen Strom beaufschlagt werden. Dabei werden die Zeitdauer und die Stromstärke in Abhängigkeit vom Draht-Querschnitt so bemessen, dass eine zum Verbacken ausreichende Stromwärme entsteht, der Strom aber nicht zu Schäden des Drahtelementes und/oder der Isolation führen kann. Abschließend kann nach einer bestimmten Abkühlzeit die fertige Formspule aus der Vorrichtung entnommen und weiterverarbeitet werden. Dabei werden dann mehrere so gefertigte Formspulen unter bereichsweiser Überlappung zu einer erfindungsgemäßen Schrägwicklung zusammengefügt. Es erfolgt eine mechanische Fixierung und es kann zusätzlich noch eine Verbackung der vorhandenen Backlack-Beschichtungen erfolgen, und zwar durch zeitweiliges Erwärmen.

Durch die optimierte Formgebung der erfindungsgemäßen Formspule mit genau definierten Krümmungsradien und Versatzabschnitten wird innerhalb der fertigen Schrägwicklung ein hoher Kupfer-Füllgrad erreicht. Hierbei wird zweckmäßigerweise jeder Wicklungsstrang durch mindestens eine Formspule gebildet. Der Schaltungsaufwand kann für manche Schaltarten reduziert werden, indem mehrere Formspulen als Kette gefertigt werden. Im Falle einer derartigen Kettenfertigung der Formspulen muss nach der Wicklungsbildung nur noch Anfang und Ende der jeweiligen Kette verbunden werden, und man erhält somit eine im Dreieck geschaltete Schrägwicklung, bei der alle Segmente eines Strangs in Reihe liegen.

Eine Herstellungsvorrichtung für eine erfindungsgemäße Formspule besteht aus einer um eine Rotationsachse rotierend antreibbaren Wickeleinrichtung, die quer zur Rotationsachse in zwei Werkzeugkörper geteilt ist. Diese Werkzeugkörper weisen auf ihren einander zugewanden Stirnseiten komplementäre, den gewünschten inneren und äußeren Flächenkonturen der zu wickelnden Formspule als Negativkontur entsprechende Formflächen mit Seitenbereichen zur Formung der mit verschiedenen Krümmungsradien gekrümmten Formspulseiten sowie mit Übergangsbereichen zur Formgebung der Windungsversatzabschnitte auf. Im Bereich wenigstens einer der Formflächen sind Wickelelemente als Umlenkpunkte zur Festlegung des Verlaufs der Windungen des Drahtelementes angeordnet.

Zudem sind die Werkzeugkörper in Richtung der Rotationsachse relativ zueinander bewegbar, und zwar zwischen einer voneinander beabstandeten Entnahmestellung und einer einander angenäherten Wickelstellung, wobei in der Wickelstellung die Formflächen über einen Wickelspalt beabstandet sind, der hinsichtlich seiner Spaltweite so in Anpassung an das jeweilige Drahtelement bemessen und einstellbar ist, dass das Drahtelement mit einem geringen Wickelspiel beim Wickeln definiert geführt unter anpassender Formgebung zwischen den Formflächen führbar ist. Durch Rotation der Wickeleinrichtung wird dann das mit einem Ende im Bereich einer der Formflächen fixierte Drahtelement selbsttätig von außen zwischen die Formflächen in den Wickelspalt gezogen und dabei spiralartig um die Wickelelemente gewickelt. Das Drahtelement passt sich dabei optimal an die komplementären Oberflächen-Topografien der beiden Formflächen an, und zwar sowohl im Bereich der gekrümmten, die Formspulseiten formenden Seitenbereiche als auch im Bereich der die Windungsversatzabschnitte formenden Übergangsbereiche.

In bevorzugter Ausgestaltung ist eine Einrichtung zum Beaufschlagen der gewickelten und verpressten Formspule über ihre Wicklungsenden mit einem elektrischen, bezüglich Zeitdauer und Stromstärke derart bemessenen Strom vorgesehen, dass die Formspule zum Verbacken der Draht-Backlack-Beschichtung durch Stromwärme erwärmbar ist.

Nach dem Wickeln und Verbacken kann die fertige Formspule aus der Vorrichtung entnommen werden, indem die Werkzeugkörper in die Entnahmestellung bewegt werden. Die so gefertigten Formspulen werden dann der weiteren Verarbeitung zugeführt, so dass sie zu der erfindungsgemäßen freitragenden Schrägwicklung zusammengesetzt und stoffschlüssig verbunden werden. Die Wicklungsanfänge und -enden der einzelnen Formspulen werden in einer bestimmten Weise elektrisch miteinander verschaltet.

Anhand der Zeichnungen soll die Erfindung im Folgenden beispielhaft genauer erläutert werden. Es zeigen:
- Fig. 1: einen beispielhaften Elektromotor im Axialschnitt mit einer erfindungsgemäßen, jedoch vereinfacht dargestellten freitragenden Wicklung, die hier beispielhaft statorseitig angeordnet ist,
- Fig. 2: eine vergrößerte Seitenansicht einer erfindungsgemäßen segmentierten Wicklung mit mehreren Formspulen,
- Fig. 3: eine weiter vergrößerte Stirnansicht der Wicklung in axialer Richtung gemäß Pfeil III in Fig. 2,
- Fig. 4: eine Ansicht einer einzelnen Formspule der Wicklung gemäß Fig. 2 und 3,
- Fig. 4a, 4b: alternative geometrische Formen einer erfindungsgemäßen Formspule,
- Fig. 5: einen vergrößerten Querschnitt der Formspule in der Schnittebene V-V gemäß Fig. 4,
- Fig. 6: einen vergrößerten Querschnitt durch eine in Fig. 5 mit "VI" gekennzeichnete Windungslage des Drahtelementes in einer beispielhaften Ausführung als Paralleldraht,
- Fig. 6a: eine alternative Ausführung einer erfindungsgemäßen Formspule,
- Fig. 6b,c,d: alternative geometrische Formen des Wicklungskörpers einer erfindungsgemäßen Schrägwicklung,
- Fig. 7: eine vereinfachte Perspektivansicht einer Herstellungsvorrichtung in Form einer zweiteiligen Wickeleinrichtung mit zwei Werkzeugkörpern in einer geöffneten Entnahmestellung,
- Fig. 8: einen der zwei Werkzeugkörper gemäß Fig. 7 mit einem fixierten Drahtelement-Ende bzw. -Anfang,
- Fig. 9: eine schematische Seitenansicht der Wickeleinrichtung in einer Wickelstellung mit geschlossenen Werkzeugkörpern während des Wickelvorgangs mit einem gestrichelt angedeuteten Drahtelement,
- Fig. 10: eine Ansicht analog zu Fig. 9, jedoch nach dem Wickelvorgang thermischen Verbacken der Formspule,
- Fig. 11: eine Seitenansicht analog zu Fig. 9 und 10 in der Entnahmestellung zur Entnahme der gewickelten und verbackenen Formspule und
- Fig. 12: eine zusätzliche Perspektivansicht der Entnahmestellung gemäß Fig. 11.
- Fig. 13 - 17: eine Vorrichtung zur Herstellung der Formspule gemäß Fig. 6a in unterschiedlichen Ansichten.

In den verschiedenen Figuren sind gleiche Teile stets mit denselben Bezugszeichen versehen.

In Bezug auf die sich anschließende Figurenbeschreibung wird in Bezug auf die vorliegende Erfindung beansprucht, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal jedes Ausführungsbeispiels auch unabhängig von allen anderen im Zusammenhang damit beschriebenen Teilmerkmalen für sich und auch in Kombination mit beliebigen Merkmalen eines anderen Ausführungsbeispiels eine erfinderische Bedeutung haben.

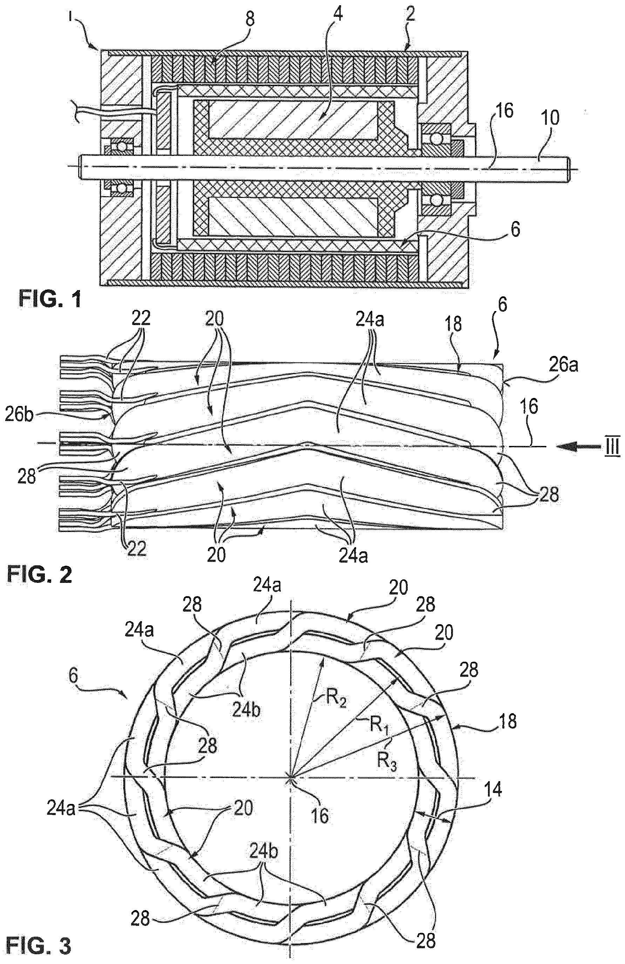

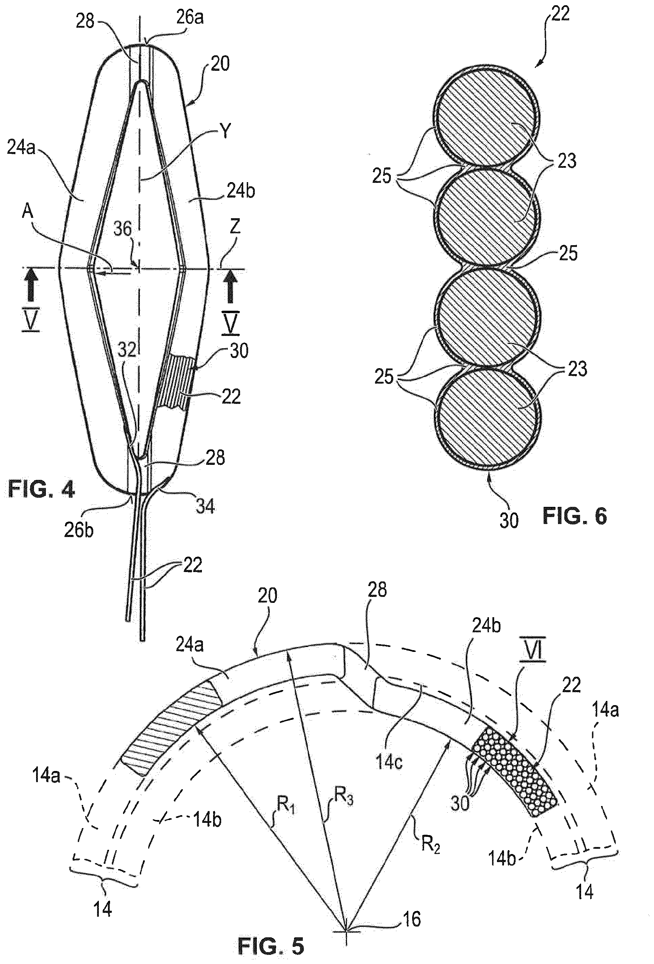

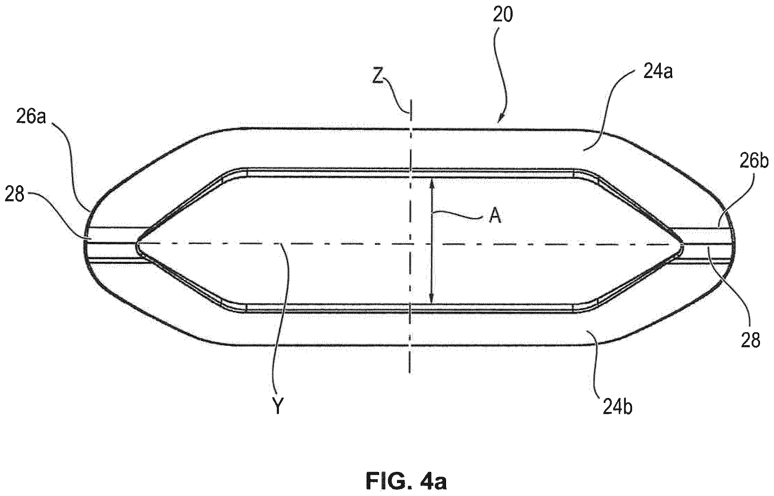

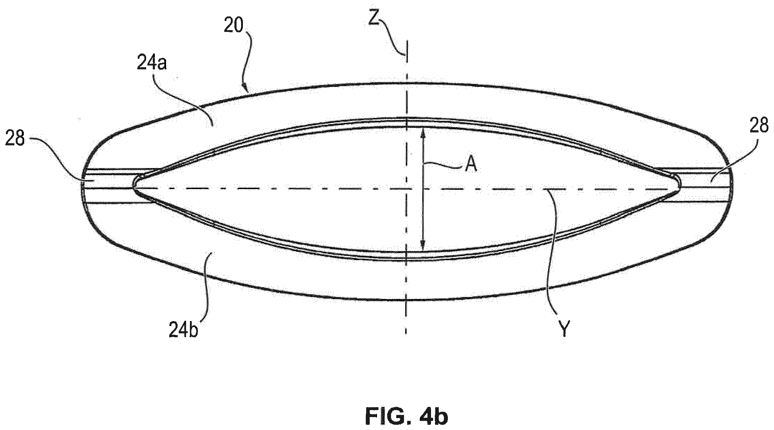

Wie in den Figuren 2 bis 5 dargestellt ist, umfasst die Wicklung 6 einen hohlen segmentierten Wicklungskörper 18, der eine mittlere Längsachse 16 aufweist. Der segmentierte Wicklungskörper 18 ist insbesondere als selbsttragende Luftspalt-Schrägwicklung aus einzelnen Formspulen 20 hergestellt. Die Anzahl der Formspulen 20 ist größer/gleich zwei Stück, vorzugsweise gleich oder größer drei Stück. In Figur 4 ist eine Ausführungsform einer erfindungsgemäßen Formspule 20 dargestellt. Diese erfindungsgemäße Formspule 20 ist aus einem elektrisch leitfähigen Drahtelement 22 hergestellt. Dieses Drahtelement 22 weist eine äußere elektrische Isolierung auf. Bei dem Drahtelement 22 kann es sich um einen einzelnen, an seinem Umfang mit einer Isolierlackschicht versehenen Runddraht, zum Beispiel aus Kupfer gemäß DIN EN 60317-20, 2000/10 handeln. Andere mögliche Drahtelementformen sind zum Beispiel ein Paralleldraht, mehrere parallel geführte Einzeldrähte, ein Litzendraht oder ein Formdraht.

Die erfindungsgemäße Formspule 20 besteht aus mindestens einer Windung um 360° aus dem Drahtelement 22. Es liegt im Rahmen der Erfindung, auch eine Formspule aus mehreren parallelen übereinander und nebeneinander verlaufenden Windungen 30 herzustellen. Die Anzahl der Formspulen 20 pro Wicklung 6 wird als Teiligkeit der Wicklung 6 bezeichnet. Alle Windungen 30 einer Formspule 20 haben denselben Wickelsinn, dieser ist mathematisch positiv, das heißt im Uhrzeigersinn oder mathematisch negativ, das heißt entgegen dem Uhrzeigersinn. Weiterhin besitzen alle Formspulen 20 der Wicklung 6 denselben Wickelsinn. Wie in Figur 4 zu erkennen ist, weist eine erfindungsgemäße Formspule 20 vorzugsweise mehrere parallel zueinander verlaufende Windungen 30 auf, wobei jede Formspule 20 zwei Windungsseiten bzw. Formspulseiten 24a, 24b aufweist, und zwar die obere Formspulseite 24a und die untere Formspulseite 24b. An ihren Stirnseiten, die einander gegenüberliegen, weist die Formspule 20 einen Übergang zwischen den Formspulseiten 24a und 24b auf, so dass dort eine Stirnverbindung 26a, 26b gegeben ist. Die Gemeinschaft aller Stirnverbindungen 26a, 26b aller in der erfindungsgemäßen Wicklung vorhandenen Formspulen 20 bildet den Wickelkopf der erfindungsgemäßen Schrägwicklung an ihren axialen gegenüberliegenden Enden.

Ein zu einer Diagonalen Y durch die Stirnverbindungen senkrechter Abstand zwischen den Formspulseiten 24a, 24b ist die Wicklungsweite A. Bei einer erfindungsgemäßen Schrägwicklung 6 schwankt die Wicklungsweite A zwischen einem Maximalwert und dem Wert 0, das heißt bei der erfindungsgemäßen Schrägwicklung treffen sich die beiden Formspulseiten 26a, 26b im Bereich ihrer Stirnverbindungen 26a, 26b in einem Wendepunkt. Die erfindungsgemäßen Formspule 20 kann in verschiedenen Formen ausgebildet sein, hierzu wird auf die Figuren 4, 4a, 4b verwiesen. Ihre Form beeinflusst insbesondere die Flussverkettung der Wicklung mit dem magnetischen Feld, den erreichbaren Füllfaktor des elektrischen Drahtelementes 22 und die erreichbare mechanische Festigkeit. Zweckmäßig ist eine modifizierte Rautenform, wie in Figur 4 dargestellt ist, wobei die die Stirnseiten verbindende Diagonale Y länger ist als die hierzu senkrechte Diagonale durch die Windung im Bereich der größten Wicklungsweite A. Weiterhin ist auch eine modifizierte Rautenform mit einem geraden Mittelteil, siehe Figur 4a, möglich oder eine elliptische Form, siehe Figur 4b. Weiterhin ist eine reine Rautenform ausführbar, oder aber auch eine Trapezform kann realisiert werden.

Wie sich aus den Figuren 2 und 3 ergibt, sind die Formspulen 20 am Umfang der erfindungsgemäßen Schrägwicklung, die rohrförmig ausgebildet ist, einander überlappend, das heißt in der Art von Dachziegeln angeordnet. Hierbei ist diese Anordnung der Art, dass die Formspulen 20 um die Längsachse 16 der Wicklung 6 mit ihrer radial äußeren Formspulseite 24a auf einem äußeren Zylinder 14a mit dem Radius R₃ und mit ihrer radial nach innen versetzten Formspulseite 24b auf einem Zylinder 14b mit dem gegenüber R₃ kleineren Radius R₂ liegen, wobei die radial gerichtete Innenseite der Formspulseite 24a und die radial gerichtete Außenseite der Formspulseite 24b auf einem mittleren Zylinder 14c mit dem Radius R₁ liegen, wobei gilt: R₂ < R₁ < R₃, so dass sie aufeinander liegen. Demgemäß sind die Formspulseiten 24a und 24b kreisbogenförmig gekrümmt, und zwar im Bezug auf die Längsachse 16, wobei die Formspulseite 24a die Krümmungsradien R₁, R₃ besitzt und die Formspulseite 24b die Krümmungsradien R₂, R₁. Die Zylinder 14a, 14b bilden eine rohrförmige Schale 14. In dieser Schale 14 verlaufen demgemäß die Formspule 20 mit ihren jeweiligen Formspulseiten 24a, 24b. Durch die beschriebene Überlappung der Formspule 20 am Umfang der Wicklung 6 sind in der in Figur 2 dargestellten Seitenansicht die radial nach innen versetzt verlaufenden Formspulseiten 24b von den darüber liegenden, nach außen versetzten Formspulseiten 24a überdeckt, so dass die Formspulseiten 24b nicht sichtbar sind.

Durch die beschriebene Ausgestaltung und Anordnung der Formspulseiten 24a, 24b gehen diese gemäß den Figuren 3 und 5 im Bereich der Stirnenden 26a, 26b über Stirnverbindungen ineinander über, wobei diese Stirnverbindungen den radialen Ebenenversatz zwischen den Formspulseiten 24a, 24b durch Windungs-Versatzabschnitte 28 überbrücken. Demgemäß weist jede Windung 22a zwei Versatzabschnitte 28 auf, die die von der Windung 22a gebildeten Formspulseiten 24a, 24b verbinden. In dem gezeigten Ausführungsbeispiel ist die Wicklung 6 hohlzylindrisch mit einer kreisförmigen Zylinderquerschnittsfläche ausgebildet, so dass der Wicklungskörper 18 einen im Querschnitt kreisförmigen Zylinder bildet. Bei einer derartigen Ausgestaltung verlaufen die Versatzabschnitte 28 in radialer Richtung zwischen den Formspulseiten 24a, 24b, wobei ein schräg zum Radius geneigter, geradliniger oder leicht bogenförmiger Verlauf vorhanden ist. Bei diesem Ausführungsbeispiel sind die Krümmungsradien R₁, R₂, R₃ der Formspulseiten 24a, 24b über die Längsachse 16 der Formspule 22 vom einen Stirnende 26a zum anderen Stirnende 26b jeweils konstant.

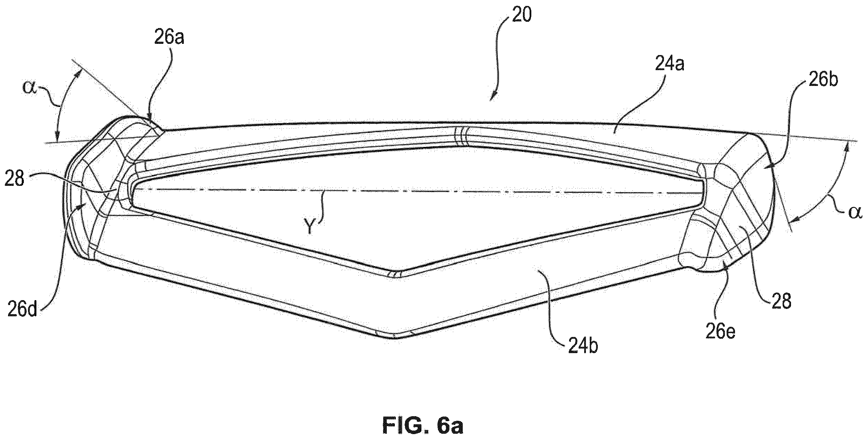

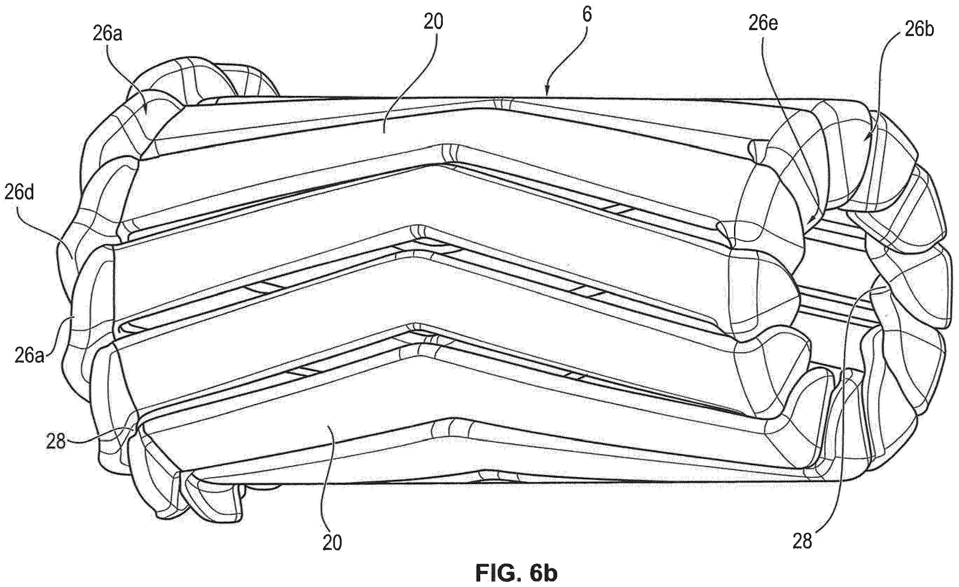

In Figur 6a ist eine alternative Ausführungsform einer erfindungsgemäßen Formspule 20 dargestellt. Bei dieser Formspule 20 sind die Stirnenden senkrecht zur längeren Diagonalen Y, die zwischen den Stirnenden 26a, 26b verläuft, z. B. senkrecht ein- bzw. abgeklappt. Der Abklappungswinkel α kann 0 bis 90° in Bezug auf die Längsachse bzw. Diagonale Y betragen. Dabei ist der Abklappungswinkel α der jeweilige Außenwinkel. Im dargestellten Beispiel sind die abgeklappten Bereiche 26d und 26e in entgegengesetzter Richtung abgeklappt. Es liegt aber auch im Rahmen der Erfindung, die beiden abgeklappten Enden 26d, 26e gleichsinnig entweder in der einen oder in der anderen Richtung abzuklappen. In Figur 6b ist eine Ausführungsform einer erfindungsgemäßen Wicklung aus einer Vielzahl von erfindungsgemäßen Formspulen 20 mit abgeklappten Stirnenden 26d, 26e gemäß Fig. 6a dargestellt. Hierbei sind - wie in Figur 6a gezeigt - die Stirnenden 26d in Richtung von der Längsachse der Wicklung nach außen gerichtet, das heißt ausgeklappt, und die gegenüberliegenden Stirnenden 26e sind in Richtung auf die Längsachse nach innen gerichtet, das heißt eingeklappt. Es liegt, wie bereits erwähnt, im Rahmen der Erfindung, entweder die Formspulen mit gleichsinnig nach innen oder nach außen geklappten Stirnenden auszubilden, oder aber auch nur an einem Ende der Formspule 20 jeweils ein eingeklapptes oder ausgeklapptes Stirnende vorzusehen. Bei der Ausführungsform mit eingeklappten oder ausgeklappten Stirnenden der Formspule 20 verläuft der Versatzabschnitt 28 im Bereich des eingeklappten oder ausgeklappten Stirnendes 26d, 26e, und zwar in axialer Richtung.

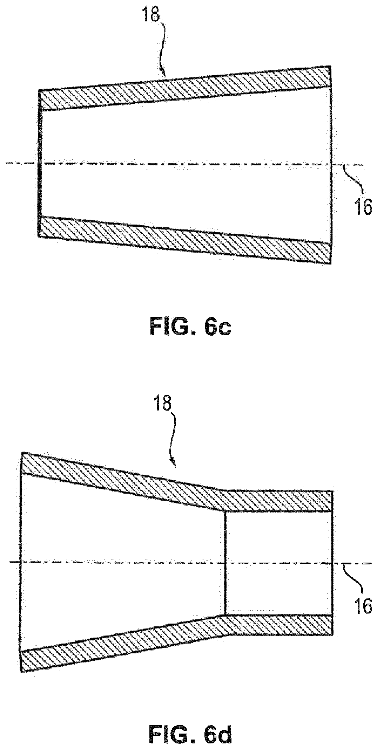

In Figur 6c ist eine alternative geometrische Form eines Wicklungskörpers 18 einer erfindungsgemäßen Wicklung 6 dargestellt, hierbei ist eine kegelstumpfförmige Ausgestaltung des Wicklungskörpers 18 vorhanden. Bei einer derartigen kegelstumpfförmigen Ausgestaltung des Wicklungskörpers 18 sind die erfindungsgemäßen Formspulen 22 derart ausgestaltet, dass sich die Radien der Formspulseiten 26a und 26b von dem Ende der Formspule mit dem kleineren Durchmesser zum Ende mit dem größeren Durchmesser kontinuierlich vergrößern. In dem Fall verlaufen die Übergangsabschnitte 28 zwischen den Formspulseiten 26a, 26b in radial-axialer Richtung.

In Figur 6d ist eine Kombination aus der Ausführungsform gemäß Figur 6c und der gemäß Figur 6 des Wicklungskörpers 18 einer erfindungsgemäßen Wicklung dargestellt, und zwar besteht hier der Wicklungskörper 18 aus einem zylindrischen Abschnitt und einem sich daran anschließenden kegelstumpfförmigen Abschnitt.

Erfindungsgemäß ist jede Formspule durch unmittelbare Formgebung des Drahtelementes 22 beim Wickelvorgang, das heißt durch Einwirkung der beim Wickelvorgang auftretenden Verformungskräfte auf das Drahtelement 22, das die Windungen 30 bildet, geformt, so dass keine nachträgliche Verformung der fertig gewickelten Formspule 20 mit ihren Krümmungsradien R₁, R₂, R₃ gekrümmten Formspulseiten 24a, 24b sowie mit den diesen verbindenden Versatzabschnitten 28 gegeben sind.

Innerhalb jeder gewickelten Formspule 20 sind einzelne Windungen 30 - siehe dazu Fig. 5, rechte Hälfte - des Drahtelementes 22 über eine Beschichtung insbesondere aus so genanntem Backlack stoffschlüssig verbunden und dadurch formfixiert. Bei dem Backlack handelt es sich in aller Regel um eine Polyamid-Beschichtung, die durch Erwärmung thermoplastisch wird und dann die Windungen 30 des Drahtelementes 22 miteinander verklebt bzw. verschweißt. Unter dem Backlack weist das Drahtelement 22 vorzugsweise noch eine elektrisch isolierende Schicht insbesondere aus Polyurethan auf.

Wie in Fig. 4 dargestellt ist, ist das Drahtelement 22 innerhalb jeder Formspule 20 spiralartig und ein - oder mehrlagig sowie vorzugsweise kreuzungsfrei von einem inneren Windungsanfang 32 zu einem äußeren Windungsende 34 gewickelt. Dieses Wickeln erfolgt um eine in Fig. 4 senkrecht zur Zeichnungsebene verlaufende Wickelachse 36, die im zusammengesetzten Zustand innerhalb des Wicklungskörpers 18 radial verläuft. Dabei kann - wie dargestellt - die Formspule 20 in einer radialen Draufsicht gesehen (Fig. 4) modifiziert rautenförmig mit in axialer Richtung einer längeren Diagonalen und in Umfangsrichtung einer kürzeren Diagonalen ausgebildet sein. Zudem weist jede Formspule 20 - bezogen auf eine sich senkrecht zur Längsachse 16 des Wicklungskörpers 18 erstreckende Schnittebene - siehe die Ebene V - V in Fig. 4 - einen flachen, rechteckigen, bogenförmigen Wicklungsquerschnitt auf, siehe Fig. 5, wo im linken Bereich der Querschnitt vereinfacht schraffiert dargestellt ist.

Wie in Fig. 5 und 6 beispielhaft dargestellt ist, kann das Drahtelement 22 mit Vorteil aus einem Paralleldraht mit mindestens zwei, wie dargestellt beispielsweise vier parallel benachbart verlaufenden und stoffschlüssig, insbesondere über ihre Backlack- Beschichtungen 25 verbundenen Drähten 23 bestehen. In diesem Fall liegen die Drähte 23 des Paralleldrahtes innerhalb der einzelnen Windungen 30 der Formspule 20 nebeneinander und somit in der Formspule 20 radial übereinander.

Alternativ zu einem Paralleldraht kann als Drahtelement 22 auch ein Einzeldraht oder ein Litzendraht verwendet werden. Im Falle eines Litzendrahtes kann dieser oval oder flach gedrückt und analog zu einem Paralleldraht gewickelt sein. Dabei verläuft vorteilhafterweise auch der Litzendraht innerhalb der Formspule 20 kreuzungsfrei, wobei sich innerhalb des Litzendrahtes einzelne Drahtadern aufgrund einer Verseilung bzw. Verdrillung kreuzen können. Als Einzeldraht kann ein Draht mit kreisförmigem Querschnitt, insbesondere ein sogenannter Dickdraht mit einem derart großen Drahtdurchmesser verwendet werden, dass - bei einlagiger Wicklung - die radiale Dicke der Formspule dem Drahtdurchmesser des Dickdrahtes entspricht oder - bei mehrlagiger Wicklung - die radiale Dicke der Formspule dem Drahtdurchmesser multipliziert mit der Anzahl der Windungen entspricht. Alternativ kann als Einzeldraht auch ein sogenannter Flachdraht mit länglichem, insbesondere rechteckigem Querschnitt verwendet werden, wobei der Flachdraht analog zu dem Paralleldraht oder dem flachgedrückten Litzendraht gewickelt wird, so dass die radiale Dicke der Formspule 20 der Drahthöhe entspricht.

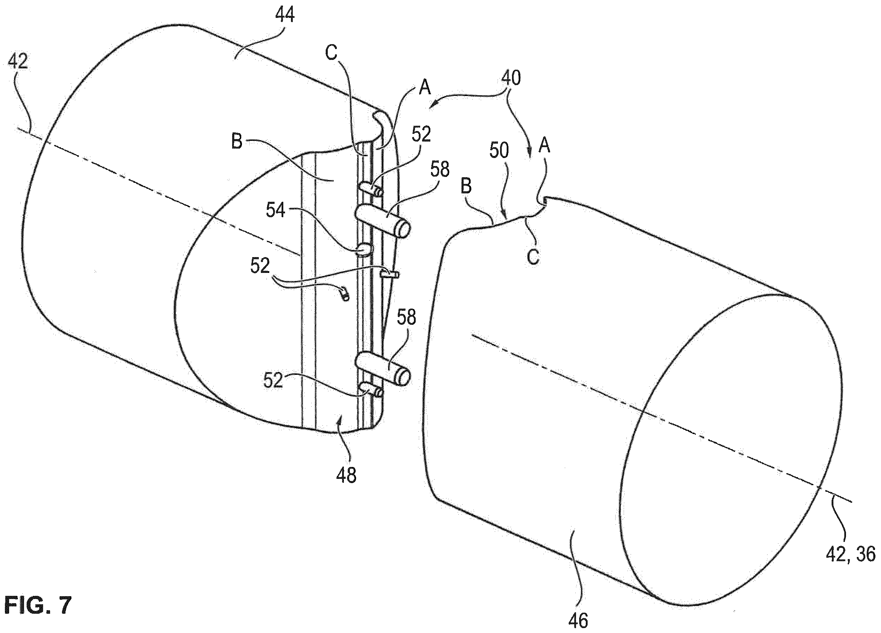

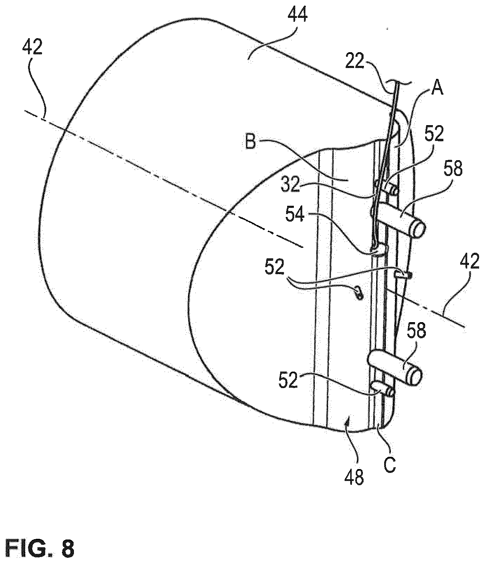

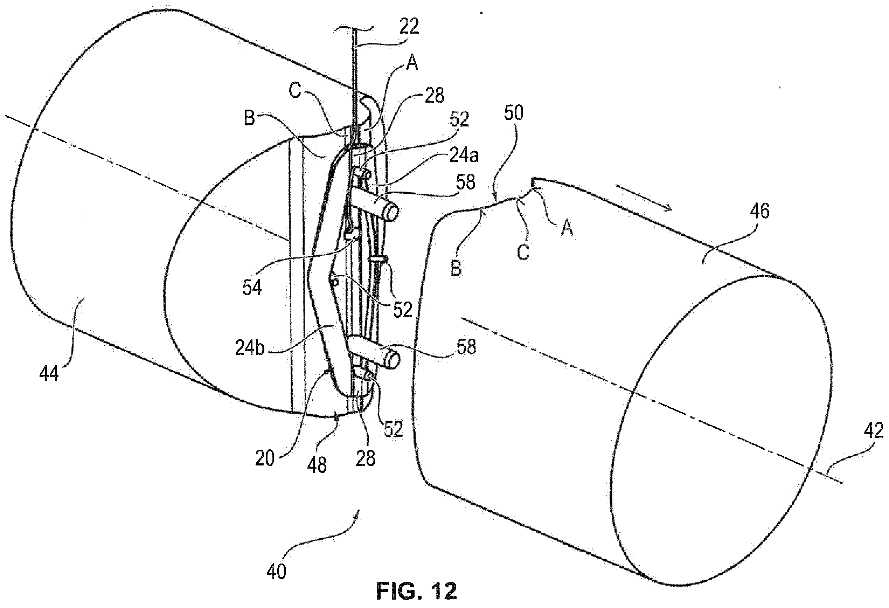

Anhand der Fig. 7 bis 12 soll eine Vorrichtung zur Herstellung der Formspule 20 für die freitragende Schrägwicklung 6 beschrieben werden. Diese Vorrichtung weist eine Wickeleinrichtung 40 auf, die um eine Rotationsachse 42 rotierend antreibbar ist. Hierbei entspricht die Rotationsachse 42 der oben erwähnten Wickelachse 36 der Formspule 20. Die Wickeleinrichtung 40 ist quer zur Rotationsachse 42 in zwei Werkzeugkörper 44 und 46 geteilt. Diese Werkzeugkörper 44, 46 weisen auf ihren einander zugewanden Stirnseiten komplementäre Formflächen 48, 50 auf, wobei die Formfläche 48 des einen Werkzeugkörpers 44 eine an die gewünschte innere Flächenkontur der zu wickelnden Formspule 20 angepasste konvexe Oberflächenform aufweist, während die Formfläche 50 des anderen Werkzeugkörpers 46 eine komplementäre und somit konkave Oberflächenform zur Formung der äußeren Flächenkontur der zu wickelnden Formspule 20 aufweist. Dies bedeutet, dass jede Formfläche 48, 50 Seitenbereiche A, B zur Formung der mit verschiedenen Krümmungsradien R₁, R₂, R₃ gekrümmten Formspulseiten 24a, 24b sowie zwischen den Seitenbereichen A,B Übergangsbereiche C zur Formung der Versatzabschnitte 28 aufweist. Die Übergangsbereiche C haben eine Oberflächenform, die dem negativen Abdruck der Übergangsbereiche entspricht. Hierbei sind im Bereich wenigstens einer der Formflächen, wie dargestellt beispielsweise im Bereich der Formfläche 48 des ersten Werkzeugkörpers 44, vorstehende Wickelelemente 52 als Umlenkpunkte zur Festlegung des Verlaufs der Windungen 30 des Drahtelementes 22 angeordnet. Diese Wickelelemente 52 legen somit die Lage von inneren Umlenkpunkten der Formspule 20 fest, siehe dazu insbesondere Fig. 12, wo die fertig gewickelte Formspule 20 mit eingezeichnet ist. Weiterhin ist gemäß Fig. 8 und 12 im Bereich einer der Formflächen, beispielsweise ebenfalls der Formfläche 48, eine Halterung 54 für den Wicklungsanfang 32 des Drahtelementes 22 vorgesehen. Diese Halterung 54 kann mit Vorteil durch eine Klemmöffnung zum einfachen kraftschlüssigen Einstecken des Endes des Drahtelementes 22 gebildet sein.

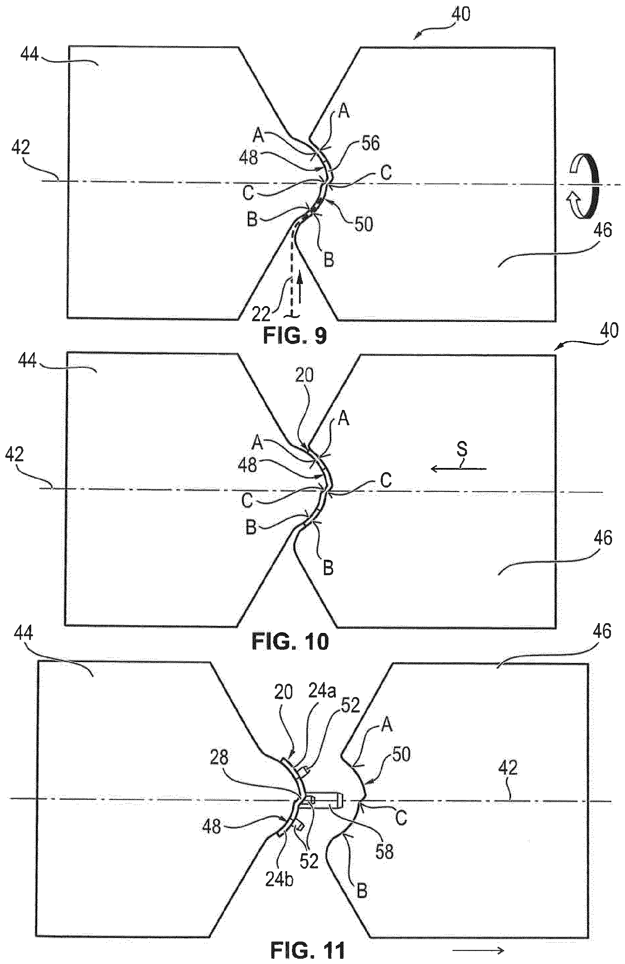

Wie sich weiterhin aus Fig. 7 bis 12 ergibt, sind die beiden Werkzeugkörper 44, 46 in Richtung der Rotationsachse 42 relativ zueinander bewegbar. Dazu kann einer der Werkzeugkörper feststehend und der andere Werkzeugkörper beweglich sein. Die Werkzeugkörper 44, 46 sind dadurch zwischen einer voneinander beabstandeten Entnahmestellung (siehe Fig. 7, 11 und 12) und einer einander angenäherten Wickelstellung bewegbar, wobei in der Wickelstellung (siehe dazu Fig. 9) die Formflächen 48, 50 über einen Wickelspalt 56 beabstandet sind, der so in Anpassung an das jeweilige Drahtelement 22 bemessen oder einstellbar ist, dass das Drahtelement 22 mit einem geringen Wickelspiel beim Wickeln definiert geführt und unter anpassender Formgebung zwischen die Formflächen 48, 50 führbar ist. Zur Situation beim Wickelvorgang wird auf Fig. 9 verwiesen. Durch Rotation der Wickeleinrichtung 40 mit den beiden geschlossenen Werkzeugkörpern 44 und 46 um die Rotationsachse 42 wird das gestrichelt angedeutete Drahtelement 22, welches einendig in der Halterung 54 fixiert ist, selbsttätig in den Wickelspalt 56 hineingezogen und dabei definiert um die Wickelelemente 52 gelegt. Durch die von den Formflächen 48, 50 definierte Form des Wickelspaltes 56 erfolgt eine formgebende Biegung des Drahtelementes 22 an die Formflächen 48, 50. Die Wickeleinrichtung 40 wird solange bzw. mit so vielen Umdrehungen gedreht, bis die Formspule 20 mit der gewünschten Anzahlung von Windungen 30 gewickelt ist.

Indem die Werkzeugkörper 44, 46 aus der Wickelstellung weitergehend um einen bestimmten Weg s - mit s größer Null und kleiner/gleich 0,5 mm - gegeneinander bewegbar sind - siehe dazu Fig. 10 - kann die gewickelte Formspule 20 unter Beseitigung des Wickelspiels fixiert werden. Die Vorrichtung weist weiterhin eine Einrichtung zum Beaufschlagen der gewickelten und fixierten Formspule 20 über ihre Wicklungsenden mit einem elektrischen, derart bezüglich Zeitdauer und Stromstärke bemessenen Storm auf, dass die Formspule 20 zum Verbacken der Draht-Backlack-Beschichtung durch Stromwärme erwärmbar ist. Alternativ kann auch eine Verklebung der Windungen durch Tränklack oder ein Umspritzen mit Kunststoff erfolgen. Weiterhin sind die beiden Werkzeugkörper 44, 46 zweckmäßigerweise über axiale bzw. achsparallele, stiftförmige Führungselemente 58, die in Führungsbohrungen 58a eingreifen, relativ zueinander in Rotationsrichtung ausgerichtet geführt. Damit wird sichergestellt, dass die Formflächen 48, 50 stets passgenau einander gegenüberliegen.

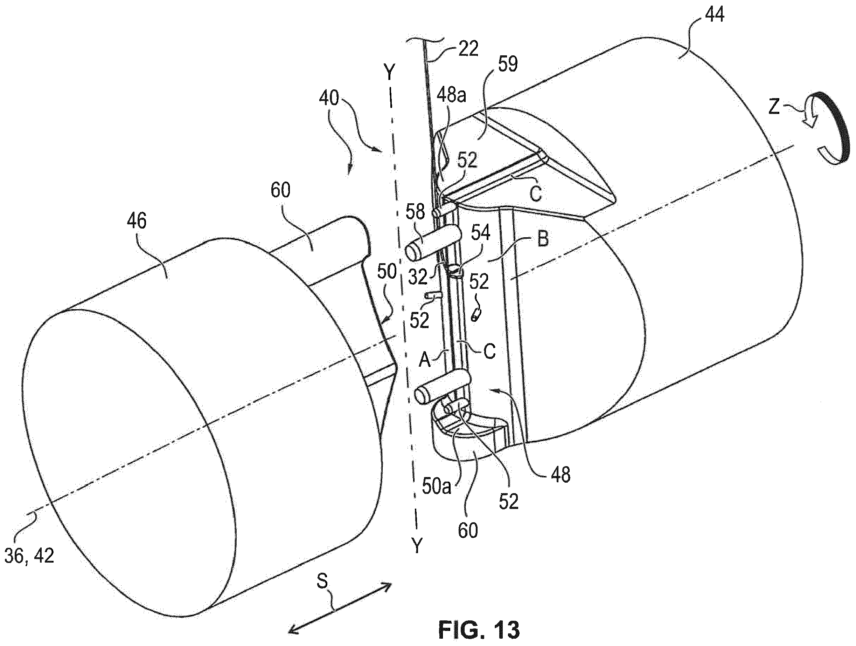

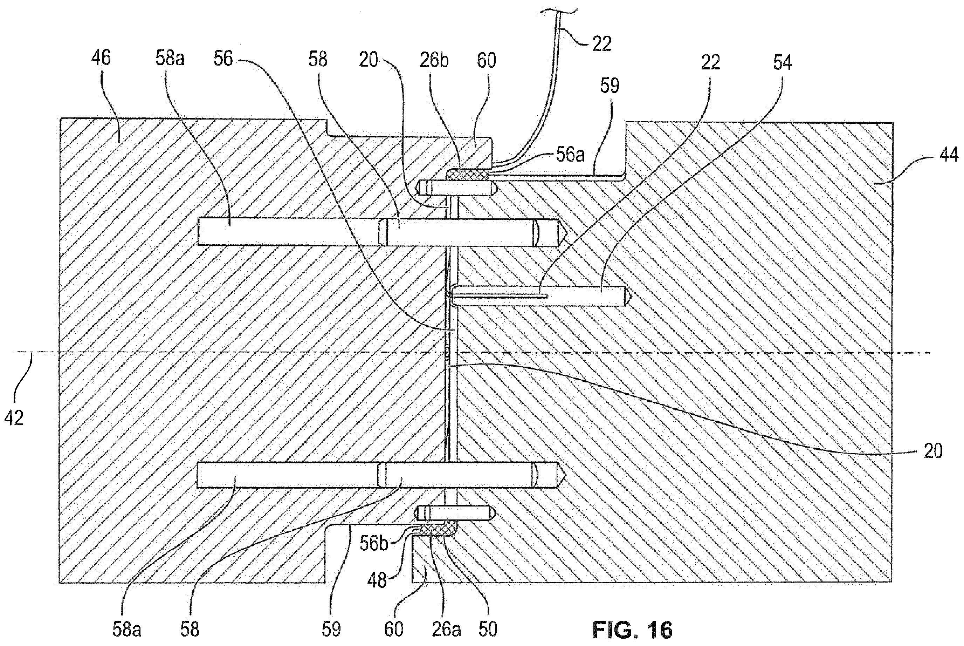

In den Figuren 13 bis 17 ist eine Vorrichtung zur Herstellung einer Formspule 20 gemäß Figur 6a dargestellt. Hierbei sind gleiche Teile wie in den Figuren 1 bis 12 mit denselben Bezugsziffern gekennzeichnet. Insofern kann in vollem Umfange auf die Beschreibung zu den Figuren 1 bis 12 verwiesen werden, was die konstruktive Ausgestaltung und die Funktion der Vorrichtung gemäß den Figuren 13 bis 17 betrifft. Bei der Vorrichtung gemäß den Figuren 13 bis 17 weist gesehen in Längsrichtung Y-Y der Formflächen 48, 50 der jeweilige Werkzeugkörper 44, 46 an dem an seinen gegenüberliegenden Enden zwischen den jeweiligen Formflächen 48, 50 ausgebildeten Wickelspalt 56 jeweils unter einem Winkel von 90° zu den Formflächen 48, 50 verlaufende Spaltabschnitte 56a, 56b auf. Diese Spaltabschnitte 56a, 56b verlaufen in zueinander entgegengesetzten Richtungen und dienen zur Formgebung der z. B. rechtwinklig abgeklappten Stirnenden 26a, 26b der Formspule 20, siehe Figur 6a. Hierzu besitzen die die jeweiligen Spaltabschnitte 56a, 56b einschließenden Flächenfortsätze 48a, 50a der Formflächen 48, 50 jeweils die Negativkontur der anliegenden Flächen der Stirnenden 26a, 26b der Formspule 20. Zur Ausbildung der Flächenfortsätze 48a, 50a weist jeder der Werkzeugkörper 44, 46 einen durch eine Abflachung 59 des Werkzeugkörpers 44, 46 ausgebildeten Flächenfortsatz 48a bzw. 50a und einen an den Werkzeugkörpern 44, 46 ausgebildeten Werkzeugkörperansatz 60 auf, wobei in der Wickelstellung der Werkzeugkörperansatz 60 des einen Werkzeugkörpers 44, 46 den von der Abflachung 59 gebildeten Flächenfortsatz 48a des anderen Werkzeugkörpers 44, 46 überdeckt, wodurch die jeweiligen Spaltabschnitte 56a, 56b ausgebildet werden, siehe hierzu insbesondere Figuren 13 und 16.

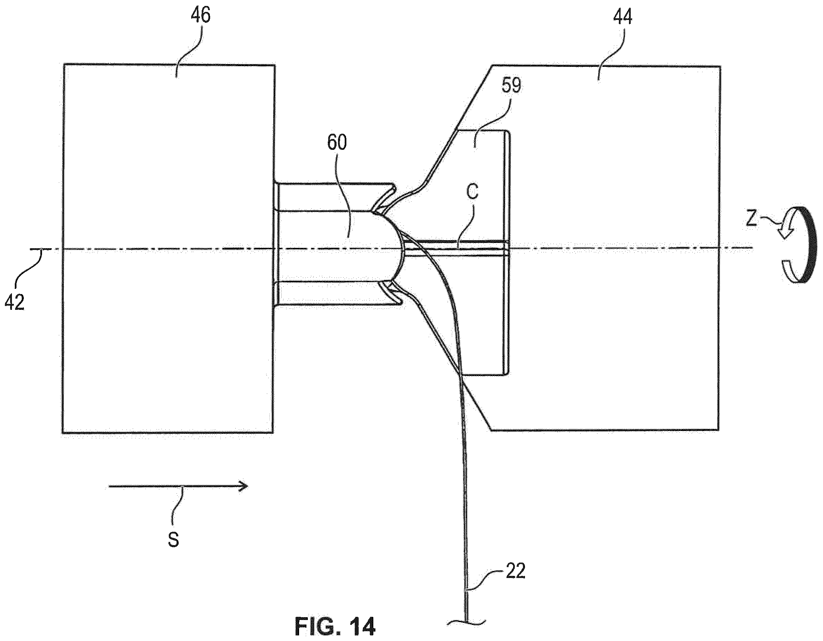

In Figur 13 ist die Vorrichtung in ihrer Stellung gezeigt, in der die Werkzeugkörper 44, 46 auseinandergefahren sind, wie zu den Figuren 7 bis 12 beschrieben, und das Drahtelement 22 eingelegt und mit seinem Drahtanfang an der Halterung 54 eingeklemmt ist. Figur 14 zeigt den geschlossenen Zustand der Vorrichtung gemäß Fig. 13 zu Beginn des Wickelverfahrens, wobei das Drahtelement 22 dann zwischen den Formflächen 48, 50 und den Flächenfortsätzen 48a, 50a und dem zwischen diesen gebildeten Wickelspalt 56 und den Spaltabschnitten 56a, 56b Lage für Lage zur Formspule 20 gewickelt wird.

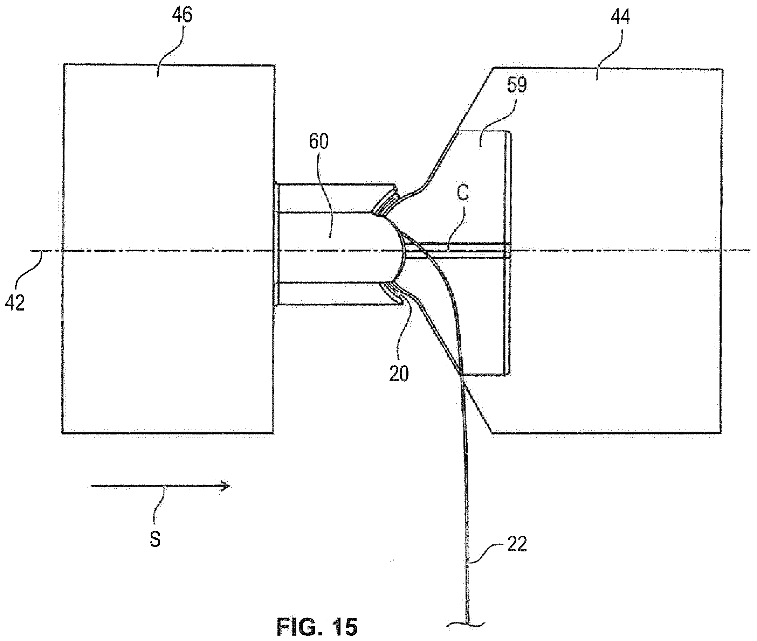

In Figur 15 ist die Vorrichtung im geschlossenen Zustand nach Beendigung des Wickelverfahrens dargestellt, wobei zu erkennen ist, dass die Formspule 20 fertig gewickelt ist, da der Wickelspalt 56 zwischen den Werkzeugkörpern 44, 46 vollständig mit der fertig gewickelten Formspule 20 ausgefüllt ist.

In Fig. 16 ist die fertig gewickelte Formspule 20 mit ihren abgeklappten Stirnenden 26a, 26b im noch geschlossenen Zustand der Vorrichtung als Schnittdarstellung dargestellt. Hierbei ist die Lage der abgeklappten Stirnenden 26a, 26b der Formspule 20 zwischen den Abflachungen 59 und den Werkzeugkörperansätzen 60 der Werkzeugkörper 44, 46 zu erkennen. Weiterhin ist hier dargestellt, wie die Führungselemente 58 in diesen gegenüberliegende Führungsbohrungen 58a eingreifen.

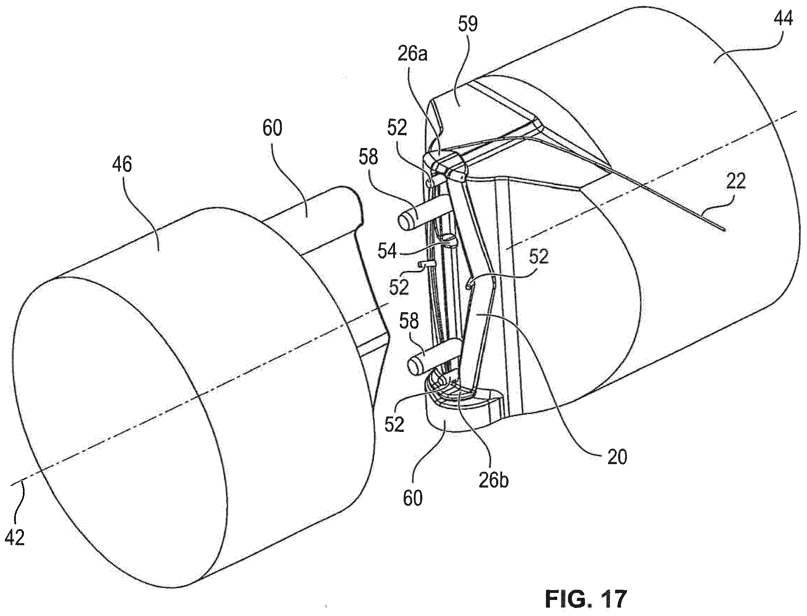

In Fig. 17 ist die Offenstellung der Vorrichtung nach Fertigstellung der Formspule 20 dargestellt, in der die Formspule 20 aus dem Werkzeug entnommen werden kann.

Abschließend wird das Verfahren zum Herstellen einer Formspule 20 für eine freitragende Schrägwicklung 6 beschrieben werden. Die erfindungsgemäße Formspule 20 wird durch unmittelbare Formgebung des Drahtelementes 22 während des Wickelvorgangs aufgrund der hierbei auftretenden Wickelkräfte - und somit ohne nachträgliche Verformung der fertig gewickelten Formspule 20 - mit ihren unterschiedlich gekrümmten Formspulseiten 24a und 24b sowie mit den stirnseitigen Versatzabschnitten 28 und gegebenenfalls mit den abgewickelten Stirnenden 26a, 26b geformt. Dies geschieht mit der Vorrichtung gemäß Fig. 7 bis 12 bzw. Fig. 13 bis 17 wie oben beschrieben. Nach dem formgebenden Wickelvorgang der Formspule 20 wird diese zum Verbacken einer Backlack-Beschichtung 25 des Drahtelementes 22 zeitweilig erwärmt. Vorzugsweise wird die Formspule 20 zum Erwärmen zeitweilig mit einem elektrischen Strom beaufschlagt, so dass die Erwärmung durch innere Stromwärme erfolgt. Die Drehrichtung beim Wickelvorgang ist mit dem Pfeil Z gekennzeichnet.

Nach einer bestimmten Abkühlzeit wird die so gefertigte Formspule 20 aus der Vorrichtung entnommen werden, indem die Werkzeugkörper 44, 46 in die Entnahmestellung gemäß Fig. 12, Fig. 17 bewegt werden. Für die Entnahme kann es vorteilhaft sein, zumindest eine Teilmenge der Wickelelemente 52 lösbar an dem jeweiligen Werkzeugkörper zu fixieren, so dass vor der Entnahme der Formspule 20 zumindest ein Teil der Wickelelemente 52 entfernt werden kann.

Nach Herstellung einer bestimmten Anzahl von Formspulen 20 werden diese unter bereichsweiser Überlappung zu dem Wicklungskörper 18 zusammengesetzt, mechanisch fixiert sowie zum Verbacken der Backlack-Beschichtungen 25 zeitweilig erwärmt. Daraus resultiert die freitragende Schrägwicklung 6 wie in Fig. 2, 3 und 6b veranschaulicht.

## Patentansprüche

1. Formspule (20) zum Herstellen einer selbsttragenden Luftspaltwicklung für einen Elektrokleinmotor (1), wobei die Formspule (20) aus mindestens einer Windung (30) um 360° eines Drahtelementes (22) gebildet ist, wobei die Formspule (20) zwei Windungsseiten bzw. Formspulseiten (24a, 24b) aufweist, und zwar eine obere Formspulseite (24a) und eine untere Formspulseite (24b), und die beiden Formspulseiten (24a, 24b) endseitig über Stirnverbindungen verbunden sind, und die Formspule (20) um eine Längsachse (16) der Luftspaltwicklung (6) derart ausgebildet ist, dass die obere Formspulseite (24a) auf einem äußeren Zylinder (14a) mit einem Radius (R3) und die untere Formspulseite (24b) auf einem Zylinder (14b) mit einem gegenüber dem Radius (R3) kleineren Radius (R2) liegt, so dass zwischen der oberen Formspulseite (24a) und der unteren Formspulseite (24b) ein radialer Ebenen-Versatz besteht, wobei die beiden Formspulseiten (24a, 24b) im Bereich ihrer Stirnverbindungen den radialen Ebenen-Versatz durch Windungs-Versatzabschnitte (28) in radialer Richtung überbrücken,
**dadurch gekennzeichnet, dass** die aus der mindestens einen Windung (30) mit einer oberen und unteren Formspulseite (24a, 24b) und mit den Versatzabschnitten (28) gebildete Formspule (20) durch unmittelbare Krafteinwirkung auf das die Windung (30) bildende Drahtelement (22) durch die beim Wickelvorgang wirksamen Kräfte geformt ist, so dass keine Längenänderung in der einzelnen Windung (30) vorhanden ist, so dass eine Querschnittsänderung des Drahtelementes (22) und ein Reißen oder Abplatzen einer Drahtbeschichtung vermieden ist und im Bereich der Versatzabschnitte (28) ein Vorlauf als Längen-Reservoir des Drahtelementes (22) nicht vorhanden ist.

2. Formspule nach Anspruch 1,
**gekennzeichnet durch** mindestens eine in Draufsicht gesehen rautenförmige Windung (30), eine trapezförmige Windung (30), eine elliptische Windung (30), eine mit einem geraden Mittelteil modifizierte rautenförmige Windung (30) oder eine modifizierte rautenförmige Windung, deren zu ihrer Längsachse (Y) verlaufende Querachse (Z) im Bereich ihrer größten Windungsweite (A) kürzer ist als die Längsachse (Y) zwischen ihren Stirnenden.

3. Formspule nach Anspruch 1 oder 2,
**dadurch gekennzeichnet, dass** die Krümmungsradien (R₁, R₂, R₃) der Formspulseiten (24a, 24b) über die Längsachse (16) der Formspule (20) von einem Stirnende (26a) zum anderen Stirnende (26b) jeweils konstant sind, wobei die Versatzabschnitte (28) radial gerichtet zur Längsachse (16) verlaufen.

4. Formspule nach Anspruch 1 oder 2,
**dadurch gekennzeichnet, dass** die Krümmungsradien (R₁, R₂, R₃) der Formspulseiten (24a, 24b) über die Längsachse (16) der Formspule (20) von einem Stirnende (26a) zum anderen Stirnende (26b) stetig zunehmen, wobei die Versatzabschnitte (28) radial-axial zur Längsachse (16) gerichtet verlaufen.

5. Formspule nach Anspruch 1 oder 2,
**dadurch gekennzeichnet, dass** die Krümmungsradien (R₁, R₂, R₃) der Formspulseiten (24a, 24b) über ihre Längsachse (16) von einem Stirnende (26a) zum anderen Stirnende (26b) über einen ersten Abschnitt konstant sind und über einen zweiten Abschnitt sich daran anschließend kontinuierlich zu- oder abnehmen.

6. Formspule nach einem der Ansprüche 1 bis 5,
**dadurch gekennzeichnet, dass** die Stirnenden (26a, 26b) mit einem Abklappungswinkel (α) von 0 bis 90° und insbesondere von 90 ° in Bezug auf die Längsachse (16) in Richtung auf die Längsachse nach innen oder in Richtung von der Längsachse (16) weg nach außen abgeklappt sind.

7. Formspule nach einem der Ansprüche 1 bis 6,
**dadurch gekennzeichnet, dass** das Drahtelement (22) spiralartig und ein- oder mehrlagig sowie insbesondere kreuzungsfrei von einem Windungsanfang (32) zu einem Windungsende (34) gewickelt ist.

8. Formspule nach einem der Ansprüche 1 bis 7,
**dadurch gekennzeichnet, dass** das Drahtelement (22) aus einem Einzeldraht mit einem kreisförmigen oder länglichen, beispielsweise rechteckigen Drahtquerschnitt oder aus einem Paralleldraht mit mindestens zwei, beispielsweise vier, parallel nebeneinander verlaufenden und stoffschlüssig, insbesondere über Backlack (25), verbundenen Drähten (23) oder aus einem Litzendraht besteht

9. Formspule nach Anspruch 8,
**dadurch gekennzeichnet, dass** im Falle eines Paralleldrahtes dessen Einzeldrähte (23) innerhalb von einzelnen Windungen (30) nebeneinander und somit in der Formspule (20) radial übereinander liegen.

10. Formspule nach einem der Ansprüche 1 bis 9,
**gekennzeichnet durch** einen - bezogen auf eine sich senkrecht zur Längsachse (16) des Wicklungskörpers (18) erstreckende Schnittebene (V-V) - flachen, bogenförmigen Spulenquerschnitt.

11. Selbsttragende Luftspaltwicklung, bestehend aus mindestens zwei Formspulen nach einem der Ansprüche 1 bis 10.

## Claims

1. Preformed coil (20) for producing a self-supporting air gap winding for a small electric motor (1), wherein the preformed coil (20) is formed from at least one turn (30) through 360° of a wire element (22), wherein the preformed coil (20) has two turn sides or preformed coil sides (24a, 24b), specifically an upper preformed coil side (24a) and the lower preformed coil side (24b), and the two preformed coil sides (24a, 24b) are connected at the ends by means of end connections, and the preformed coil (20) is formed around a longitudinal axis (16) of the air gap winding (6) in such a way that the upper preformed coil side (24a) lies on an outer cylinder (14a) with a radius (R3) and the lower preformed coil side (24b) lies on a cylinder (14b) with a radius (R2) which is smaller than the radius (R3), so that there is a radial planar offset between the upper preformed coil side (24a) and the lower preformed coil side (24b), wherein the two preformed coil sides (24a, 24b), in the region of their end connections, bridge the radial planar offset in the radial direction by turn offset sections (28),
**characterized in that** the preformed coil (20) which is formed from the at least one turn (30) with an upper and a lower preformed coil side (24a, 24b) and with the offset sections (28) is shaped by direct action of force onto the wire element (22), which forms the turn (30), by the forces which are active during the winding process, so that there is no change in length in the individual turn (30), so that a change in cross section of the wire element (22) and tearing or chipping of a wire coating is avoided and there is no forward run as length reservoir of the wire element (22) in the region of the offset sections (28).

2. Preformed coil according to Claim 1,
**characterized by** at least one turn (30) which is diamond-shaped as seen in plan view, a trapezoidal turn (30), an elliptical turn (30), a diamond-shaped turn (30) which is modified with a straight central part, or a modified diamond-shaped turn, the transverse axis (Z), which runs relative to its longitudinal axis (Y), of which is shorter in the region of its greatest turn width (A) than the longitudinal axis (Y) between its ends.

3. Preformed coil according to Claim 1 or 2,
**characterized in that** the radii of curvature (R₁, R₂, R₃) of the preformed coil sides (24a, 24b) are each constant over the longitudinal axis (16) of the preformed coil (20) from one end (26a) to the other end (26b), wherein the offset sections (28) run in a radially directed manner in relation to the longitudinal axis (16).

4. Preformed coil according to Claim 1 or 2,
**characterized in that** the radii of curvature (R₁, R₂, R₃) of the preformed coil sides (24a, 24b) continuously increase over the longitudinal axis (16) of the preformed coil (20) from one end (26a) to the other end (26b), wherein the offset sections (28) run in a manner directed radially-axially in relation to the longitudinal axis (16).

5. Preformed coil according to Claim 1 or 2,
**characterized in that** the radii of curvature (R₁, R₂, R₃) of the preformed coil sides (24a, 24b) are constant over their longitudinal axis (16) from one end (26a) to the other end (26b) over a first section and continuously increase or decrease over a second section adjoining the said first section.

6. Preformed coil according to one of Claims 1 to 5,
**characterized in that** the ends (26a, 26b) are folded down inward in the direction of the longitudinal axis or outward in the direction away from the longitudinal axis (16) with a fold-down angle (α) of from 0 to 90°, and in particular of 90°, in relation to the longitudinal axis (16).

7. Preformed coil according to one of Claims 1 to 6,
**characterized in that** the wire element (22) is wound from a turn start (32) to a turn end (34) in a spiral manner and in one layer or in multiple layers and also, in particular, without crossing.

8. Preformed coil according to one of Claims 1 to 7,
**characterized in that** the wire element (22) consists of an individual wire with a circular or elongate, for example rectangular, wire cross section or of a parallel wire with at least two, for example four, wires (23) which run parallel next to one another and are connected in a cohesive manner, in particular by means of a baked enamel coating (25), or of a stranded wire.

9. Preformed coil according to Claim 8,
**characterized in that**, in the case of a parallel wire, the individual wires (23) of the said parallel wire lie next to one another within individual turns (30) and therefore radially one above the other in the preformed coil (20).

10. Preformed coil according to one of Claims 1 to 9,
**characterized by** a flat, arcuate coil cross section - with respect to a sectional plane (V-V) which extends perpendicularly to the longitudinal axis (16) of the winding former (18).

11. Self-supporting air gap winding, consisting of at least two preformed coils according to one of Claims 1 to 10.

## Revendications

1. Bobine façonnée (20) destinée à créer un enroulement à entrefer autoportant pour un petit moteur électrique (1), la bobine façonnée (20) étant constituée d'au moins un enroulement (30) sur 360° d'un élément en fil (22), la bobine façonnée (20) possédant deux côtés d'enroulement ou deux côtés de bobine façonnée (24a, 24b), à savoir un côté supérieur de bobine façonnée (24a) et un côté inférieur de bobine façonnée (24b), et les deux côtés de bobine façonnée (24a, 24b) étant reliés à leurs extrémités par le biais de liaisons frontales, et la bobine façonnée (20) étant configurée autour d'un axe longitudinal (16) de l'enroulement à entrefer (6) de telle sorte que le côté supérieur de bobine façonnée (24a) se trouve sur un cylindre extérieur (14a) ayant un rayon (R3) et que le côté inférieur de bobine façonnée (24b) se trouve sur un cylindre (14b) ayant un rayon (R2) inférieur au rayon (R3), de sorte qu'un décalage de plan radial est obtenu entre le côté supérieur de bobine façonnée (24a) et le côté inférieur de bobine façonnée (24b), les deux côtés de bobine façonnée (24a, 24b) pontant le décalage de plan radial dans la zone de leurs liaisons frontales par des portions de décalage d'enroulement (28), **caractérisée en ce que** la bobine façonnée (20) constituée de l'au moins un enroulement (30) avec un côté supérieur et inférieur de bobine façonnée (24a, 24b) et avec les portions de décalage (28) est façonnée par action de force directe sur l'élément en fil (22) qui forme l'enroulement (30) par les forces agissant lors de l'opération d'enroulement, de sorte qu'il n'existe aucune modification de longueur dans l'enroulement (30) individuel, de sorte qu'une modification de la section transversale de l'élément en fil (22) et une rupture ou un éclatement d'un revêtement de fil sont évité (e) s et une amorce en tant que réserve de longueur de l'élément en fil (22) n'est pas présente dans la zone des portions de décalage (28).

2. Bobine façonnée selon la revendication 1, **caractérisée par** au moins un enroulement (30) en forme de losange vu de dessus, un enroulement trapézoïdal (30), un enroulement elliptique (30), un enroulement (30) en forme de losange modifié avec une partie centrale droite ou un enroulement en forme de losange modifié dont l'axe transversal (Z) qui s'étend par rapport à son axe longitudinal (Y) est plus court dans la zone de sa largeur d'enrouement (A) la plus grande que l'axe longitudinal (Y) entre ses extrémités frontales.

3. Bobine façonnée selon la revendication 1 ou 2, **caractérisée en ce que** les rayons de courbure (R₁, R₂, R₃) des côtés de bobine façonnée (24a, 24b) sont respectivement constants sur l'axe longitudinal (16) de la bobine façonnée (20) d'une extrémité frontale (26a) à l'autre extrémité frontale (26b), les portions de décalage (28) suivant un tracé orienté dans le sens radial par rapport à l'axe longitudinal (16).

4. Bobine façonnée selon la revendication 1 ou 2, **caractérisée en ce que** les rayons de courbure (R₁, R₂, R₃) des côtés de bobine façonnée (24a, 24b) augmentent constamment sur l'axe longitudinal (16) de la bobine façonnée (20) d'une extrémité frontale (26a) à l'autre extrémité frontale (26b), les portions de décalage (28) suivant un tracé orienté dans le sens radial-axial par rapport à l'axe longitudinal (16).

5. Bobine façonnée selon la revendication 1 ou 2, **caractérisée en ce que** les rayons de courbure (R₁, R₂, R₃) des côtés de bobine façonnée (24a, 24b) sont constants sur son l'axe longitudinal (16) d'une extrémité frontale (26a) à l'autre extrémité frontale (26b) sur une première portion, et augmentent ou diminuent continuellement sur une deuxième portion rattachée à celle-ci.

6. Bobine façonnée selon l'une des revendications 1 à 5, **caractérisée en ce que** les extrémités frontales (26a, 26b) sont rabattues avec un angle de rabattement (a) de 0 à 90° et notamment de 90° par rapport à l'axe longitudinal (16) dans la direction sur l'axe longitudinal vers l'intérieur ou dans la direction à l'écart de l'axe longitudinal (16) vers l'extérieur.

7. Bobine façonnée selon l'une des revendications 1 à 6, **caractérisée en ce que** l'élément en fil (22) est enroulé à la manière d'une spirale et sur une ou plusieurs couches et notamment sans croisement d'un début d'enroulement (32) à une fin d'enroulement (34).

8. Bobine façonnée selon l'une des revendications 1 à 7, **caractérisée en ce que** l'élément en fil (22) se compose d'un fil individuel ayant une section transversale de fil circulaire ou allongée, par exemple rectangulaire, ou d'un fil parallèle comprenant au moins deux, par exemple quatre, fils (23) qui s'étendent parallèlement les uns aux autres et qui sont reliés par fusion de matières, notamment par vernis de liage (25), ou encore d'un fil toronné.

9. Bobine façonnée selon la revendication 8, **caractérisée en ce que** dans le cas d'un fil en parallèle, ses fils individuels (23) sont disposés les uns à côté des autres au sein des enroulements (30) individuels et ainsi radialement les uns au-dessus des autres dans la bobine façonnée (20).

10. Bobine façonnée selon l'une des revendications 1 à 9, **caractérisée par** une section transversale de bobine plate en forme d'arc, en référence à un plan de coupe (V-V) qui s'étend perpendiculairement à l'axe longitudinal (16) du corps d'enroulement (18).

11. Enroulement à entrefer autoportant, composé d'au moins deux bobines façonnées selon l'une des revendications 1 à 10.
